# EUROPEAN PATENT SPECIFICATION

(11) **EP 4 203 350 B1**
(45) Date of publication and mention of the grant of the patent: **25.11.2026**
(21) Application number: 21868531.1
(22) Date of filing: 08.09.2021
(51) Int. Cl.: H04L 47/24, H04L 47/2416, H04L 47/2425, H04L 47/76, H04L 47/80, H04L 47/70, H04L 43/0852, H04L 43/0894, H04L 43/16, H04W 28/24

(54) **DATA TRANSMISSION METHOD AND RELATED DEVICE**
DATENÜBERTRAGUNGSVERFAHREN UND ZUGEHÖRIGE VORRICHTUNG
PROCÉDÉ DE TRANSMISSION DE DONNÉES ET DISPOSITIF ASSOCIÉ

(30) Priority: 18.09.2020 CN 202010986952
(43) Date of publication of application: 28.06.2023
(73) Proprietor: Huawei Technologies Co., Ltd., Shenzhen, Guangdong 518129 (CN)
(72) Inventor: LI, Hancheng, Shenzhen, Guangdong 518129 (CN); HU, Weihua, Shenzhen, Guangdong 518129 (CN); WU, Wenfu, Shenzhen, Guangdong 518129 (CN); ZHOU, Han, Shenzhen, Guangdong 518129 (CN)
(74) Representative: Goddar, Heinz J.
(86) International application number: PCT/CN2021/117212
(87) International publication number: WO 2022/057706

(56) References cited:
- EP-A1- 3 739 830
- WO-A1-2015/035591
- WO-A1-2019/062783
- WO-A1-2019/137524
- CN-A- 102 201 966
- CN-A- 104 995 951
- CN-A- 106 572 030
- CN-A- 110 267 312
- US-A1- 2020 146 077
- US-A1- 2021 399 989
- CATT: "QoS Management for V2X", 3GPP DRAFT; R1-1810546_QOS MANAGEMENT IN NR V2X, vol. RAN WG1, 29 September 2018 (2018-09-29), Chengdu, China, pages 1 - 5, XP051517954

## Description

### TECHNICAL FIELD

This application relates to the field of communication technologies, and in particular, to a data transmission method, a data transmission apparatus, a computer-readable storage medium and a chip.

### BACKGROUND

Virtual reality (virtual reality, VR) is a brand new practical technology developed in the 20th century. The virtual reality technology includes computer, electronic information, and simulation technologies, and is basically implemented by simulating a virtual environment by using a computer to provide a sense of immersion in the environment. With the continuous development of social productivity and science and technology, various industries have the growing demand for the VR technology. There has been great progress in the VR technology, and the VR technology has gradually become a new scientific and technological field.

In a fifth-generation (5-Generation, 5G) cloud (Cloud) VR scenario, virtual images are generated in the cloud, simplifying terminals, lowering use costs, avoiding "frame freezing" during use, and further reducing a delay. The cloud VR terminal for immersive experience has a much higher field of view than conventional TVs. To achieve the same definition as common videos, the cloud VR terminal needs to have a resolution, frame rate, and bit rate higher than those of common video services, posing higher bandwidth requirements on the network. If VR traffic bursts, the large burst traffic cannot be transmitted in time due to insufficient link bandwidth. As a result, a transmission delay increases, causing frame freezing.

WO 2019/062783 A1 discloses a service transmission method and apparatus, relating to the technical field of communications, for ensuring signaling interaction and packet transmission between devices. The specific solution is: an access network device receiving a data packet sent by a gateway device via a first QoS flow, and sending the data packet to a terminal device via a second carrier in accordance with a QoS parameter required by a service corresponding to the data packet according to a correlation between a QoS flow and a QoS parameter, wherein the correlation between the QoS flow and the QoS parameter comprises: the first QoS flow corresponding to a set of QoS parameters, or the first QoS flow corresponding to at least two sets of QoS parameters, or at least two QoS flows corresponding to a set of QoS parameters, or at least two QoS flows corresponding to at least two sets of QoS parameters, at least two QoS flows including the first QoS flow.

CN 110267312 A discloses a data transmission method which can be applied to user equipment (UE) or a user plane function (UPF) network element, and the method comprises the following steps: obtaining to-be-transmitted data; determining that the to-be-transmitted data is time-sensitive communication TSC data according to the network type information included in the extended Ethernet packet filtering set; determining transmission characteristics of the TSC data according to the extended Ethernet packet filtering set; and mapping the TSC data to a quality of service (QoS) flow corresponding to the transmission characteristics for transmission according to the transmission characteristics. According to the method and the device, different QoS streams can be adopted for transmission of different TSC data, so that the precision of TSC data transmission is improved.

WO 2019/137524 A1 discloses a method and system for determining a quality of service flow of a network, and a network element, capable of improving the accuracy of determining a quality of service (QoS) flow corresponding to the PCC rule, so as to improve the quality of network service of a data service. The method comprises: a session management network element receiving a policy and charge control (PCC) rule sent by a policy control network element, the PCC rule containing a Quality of Service (QoS) parameter, wherein the QoS parameter comprises standard QoS parameter indication information and a non-standard QoS parameter, and the non-standard QoS parameter comprises at least one attribute in a standard QoS parameter corresponding to the standard QoS parameter indication information, and a value corresponding thereto; and the session management network element determining a quality of service (QoS) flow corresponding to the PCC rule according to the standard QoS parameter indication information and the non-standard QoS parameter.

### SUMMARY

The invention is set out in the appended claims. Embodiments of this application provide a data transmission method, a data transmission apparatus, a computer-readable storage medium and a chip, so as to improve utilization of network resources.

According to a first aspect, an embodiment of this application provides a data transmission method, including: A first device transmits, when a transmission state of a data stream changes from a first transmission state to a second transmission state, the data stream based on a quality of service corresponding to the second transmission state; and the first device sends the data stream and first information to a second device, where the first information indicates that the data stream is transmitted based on the quality of service corresponding to the second transmission state. When the transmission state of the data stream changes, the data stream is transmitted based on the quality of service corresponding to the changed transmission state. This ensures the transmission of the data stream, and improves the utilization of network resources.

In a possible design, the first device receives first quality of service information and second quality of service information from a control plane device, where the first quality of service information corresponds to the first transmission state of the data stream, and the second quality of service information corresponds to the second transmission state of the data stream. By configuring quality of service information corresponding to different transmission states, it is ensured that the data stream is transmitted based on different qualities of service in different transmission states, thereby improving the utilization of network resources.

In another possible design, the data stream includes a plurality of substreams, a first substream in the plurality of substreams corresponds to the first quality of service information, and a second substream in the plurality of substreams corresponds to the second quality of service information. Different substreams are transmitted based on different qualities of service, thereby improving the utilization of network resources.

In another possible design, the first device detects that the transmission state of the data stream changes from the first transmission state to the second transmission state. By detecting a transmission state of a data stream, the data stream is transmitted based on different qualities of service, thereby improving the utilization of network resources.

In another possible design, the first device detects that transmission bandwidth or a transmission delay of the data stream is greater than a preset threshold.

In another possible design, the first device is a user plane device, an access network device, or a terminal device.

In another possible design, when the first device is a user plane device, first indication information is received, where the first indication information indicates the second transmission state of the data stream; or a first request message is received, where the first request message is for requesting transmission of the data stream based on the quality of service corresponding to the second transmission state; or data of the data stream is received, and based on a transmission state of the data of the data stream, it is determined that the transmission state of the data stream changes from the first transmission state to the second transmission state. By detecting a transmission state of a data stream in the above manners, the user plane device may transmit the data stream based on different qualities of service, thereby improving the utilization of network resources.

In another possible design, when the first device is an access network device, second indication information is received, where the second indication information indicates the second transmission state of the data stream. By detecting a transmission state of a data stream in the above manners, the access network device may transmit the data stream based on different qualities of service, thereby improving the utilization of network resources.

In another possible design, that the transmission state of the data stream changes from the second transmission state to the first transmission state is detected, and the first device transmits the data stream based on a quality of service corresponding to the first transmission state.

In another possible design, the first information is a transport layer identifier. For example, different priorities in an Ethernet header/IP header indicate normal traffic or burst traffic. The transmission state of the data stream is indicated by the transport layer identifier, so that the second device determines the transmission state of the data stream, and transmits the data stream based on different qualities of service, thereby improving the utilization of network resources.

In another possible design, the first information is included in a header of a general packet radio service tunneling protocol-user plane GTP-U message that carries the data stream. The transmission state of the data stream is indicated via the header of the GTP-U message, so that the second device determines the transmission state of the data stream, and transmits the data stream based on different qualities of service, thereby improving the utilization of network resources.

In another possible design, the first information is included in a source address field and/or a destination address field of an Internet Protocol IPv6 message that carries the data stream. After receiving the IPv6 message, the second device may determine the transmission state of the data stream based on the first information in the source address field and/or the destination address field in the IP header. Therefore, the GTP-U header does not need to be further parsed, thereby improving the efficiency of processing the data stream.

In another possible design, the source address field and/or the destination address field of the IPv6 message may further include one or more of the following: a TEID in a GTP-U extension header, a sequence number of a data packet, and a QoS flow identifier. After receiving the IPv6 message, the second device may determine, the transmission state or session information of the data stream corresponding to a data path based on address information of the source address field and/or the destination address field in the IP header. Therefore, the GTP-U header does not need to be further parsed, thereby improving the efficiency of processing the data stream. In addition, a corresponding field (such as a TEID, a sequence number of a data packet, and a QoS flow identifier QFI) in the GTP-U header may be deleted, so as to reduce a size of the GTP-U header and improve transmission efficiency.

In another possible design, the first information includes at least one of the following: bandwidth information, a transmission delay, indication information, and a quality of service identifier. It is ensured that a receiving device can transmit the data stream via the bandwidth information, the transmission delay, the indication information, and the quality of service identifier that are indicated by the first information, thereby improving the efficiency of transmitting the data stream.

In another possible design, the first information includes indication information, and the indication information indicates that the quality of service provided by the first device changes, for example, indicating that uplink bandwidth changes. Optionally, the first information may further include quality of service information, for example, uplink bandwidth information. After the second device receives the first information from the first device in a downlink direction, when subsequently transmitting an uplink data stream, the second device sends the uplink data stream to the first device based on bandwidth indicated by the uplink bandwidth information, and the first device receives or sends the data stream based on the bandwidth indicated by the uplink bandwidth information.

According to a second aspect, an embodiment of this application provides a data transmission apparatus. The data transmission apparatus is configured to implement the method and functions performed by the first device in the first aspect, and is implemented by hardware/software. The hardware/software thereof includes modules corresponding to the functions.

According to a third aspect, an embodiment of this application provides a data transmission apparatus. The data transmission apparatus is configured in a user plane device, an access network device, or a terminal device. The communication apparatus may be a user plane device, an access network device, or a terminal device, or a chip in the user plane device, the access network device, or the terminal device. The data transmission apparatus includes a processor, a memory, and a communication bus. The communication bus is configured to implement connection and communication between the processor and the memory. The processor executes a program stored in the memory to implement the steps in the first aspect.

According to a fourth aspect, this application provides a computer-readable storage medium, storing instructions, the instructions, when run on a computer, causing the computer to perform the method according to the above aspects.

According to a fifth aspect, this application provides a computer program product including instructions, the instructions, when run on a computer, causing the computer to perform the method according to the above aspects.

According to a sixth aspect, an embodiment of this application provides a chip, including a processor. The processor is configured to invoke instructions from a memory and run the instructions stored in the memory, so that a first device in which the chip is installed performs the method according to any one of the above aspects.

According to a seventh aspect, an embodiment of this application provides another chip, including an input interface, an output interface, and a processor, and optionally, further including a memory. The input interface, the output interface, the processor, and the memory are connected through an internal connection path. The processor is configured to execute code in the memory. When the code is executed, the processor is configured to perform the method according to any one of the above aspects.

According to an eighth aspect, an embodiment of this application provides a communication system. The communication system includes a user plane device, an access network device, or a terminal device. The user plane device, the access network device, or the terminal device may perform the method and functions performed by the first device in the first aspect.

### BRIEF DESCRIPTION OF DRAWINGS

To describe the technical solutions in embodiments of this application or in the background more clearly, the following describes the accompanying drawings for describing embodiments of this application or the background.
FIG. 1 is a schematic diagram of a structure of a 5G network architecture according to an embodiment of this application;
FIG. 2 is a schematic diagram of a scenario of an FoV transmission mode of a VR device;
FIG. 3 is a schematic diagram of bandwidth in a case of burst traffic;
FIG. 4 is a schematic diagram of implementing RCP-based end-to-end bandwidth negotiation;
FIG. 5 is a schematic diagram of data transmission according to an embodiment of this application;
FIG. 6(A) is a schematic diagram of a GTP-U message according to an embodiment of this application;
FIG. 6(B) is a schematic diagram of a GTP-U extension header according to an embodiment of this application;
FIG. 7(A) is a schematic diagram of conventional GTP-U encapsulation;
FIG. 7(B) is a schematic diagram of improved GTP-U encapsulation according to an embodiment of this application;
FIG. 8 is a schematic diagram of bandwidth control according to an embodiment of this application;
FIG. 9 is a schematic diagram of data transmission according to an embodiment of this application;
FIG. 10 is a schematic diagram of another data transmission according to an embodiment of this application;
FIG. 11 is a schematic diagram of a structure of a data transmission apparatus according to an embodiment of this application; and
FIG. 12 is a schematic diagram of a structure of a first device according to an embodiment of this application.

### DESCRIPTION OF EMBODIMENTS

The following describes embodiments of this application with reference to the accompanying drawings in embodiments of this application.

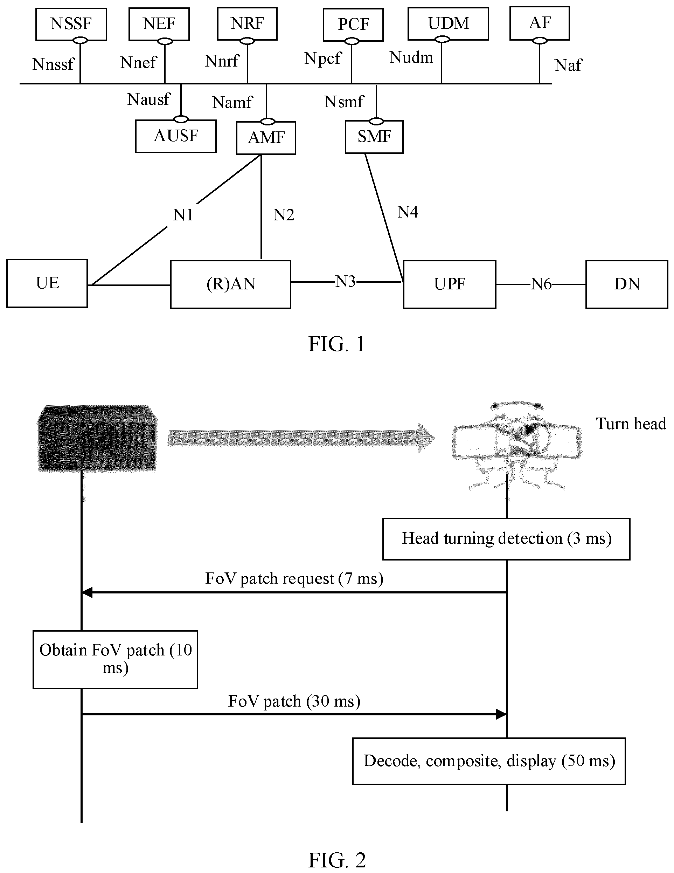

Refer to FIG. 1. FIG. 1 is a schematic diagram of a structure of a 5G network architecture according to an embodiment of this application. The 5G network architecture includes user equipment (user equipment, UE), an access network (radio access network, (R)AN) device, and a core network element.

There are the following core network devices: a user plane network element and a control plane network element. The user plane network element includes a user plane function (user plane function, UPF) entity and a data network (data network, DN). The UPF entity is mainly responsible for forwarding a data packet, controlling a quality of service (quality of service, QoS), collecting charging information, and the like. The data network (data network, DN) is mainly responsible for providing data transmission services for users, such as IP multi-media services (IP multi-media service, IMS) and Internet (internet). The control plane network element mainly includes an access and mobility management function (access and mobility management function, AMF) entity, a session management function (session management function, SMF) entity, an application function (application function, AF) entity, and a policy control function (policy control function, PCF) entity. The control plane network element is mainly responsible for service procedure interaction, and delivering a data packet forwarding policy, a QoS control policy, and the like to a user plane.

The AMF entity is mainly responsible for mobility management in a mobile network, such as user location update, user network registration, and user switching.

The SMF entity is mainly responsible for session management in a mobile network, for example, session establishment, modification, and release. For example, specific functions include assigning an IP address to a user, selecting a UPF that provides a message forwarding function, and the like.

The PCF entity is mainly responsible for providing a policy, such as a quality of service (quality of service, QoS) policy or a slice selection policy, for the AMF entity and the SMF entity.

The AF entity is mainly responsible for providing a service for a 3rd Generation Partnership Project (3rd generation partnership project, 3GPP) network, for example, affecting service routing, and interacting with a PCF to perform policy control.

There are the following communication interfaces between functional network elements in this application: N1, which is an interface between UE and a control plane network element, configured to transmit NAS signaling; N2 , which is a communication interface between an access network device and a control plane network element; N3, which is a communication interface between an access network device and a UPF entity, configured to transmit user data; and N4, which is a communication interface between an SMF entity and a UPF entity, configured to perform policy configuration on the UPF, and the like.

Cloud VR requires a terminal device to have a much higher field of view than conventional TVs. To achieve the same definition as common video services, the cloud VR terminal device needs to have a resolution, frame rate, and bit rate higher than common video services, posing higher bandwidth requirements on the network. According to actual tests and theoretical analysis, to ensure picture quality, during transmission of cloud VR, a time reserved for data sending in a phase of initial service quality is about 10 ms to 15 ms, a time reserved for data sending in a phase of comfortable experience is about 5 ms to 10 ms, and a time reserved for data sending in a phase of ideal experience is about 4 ms.

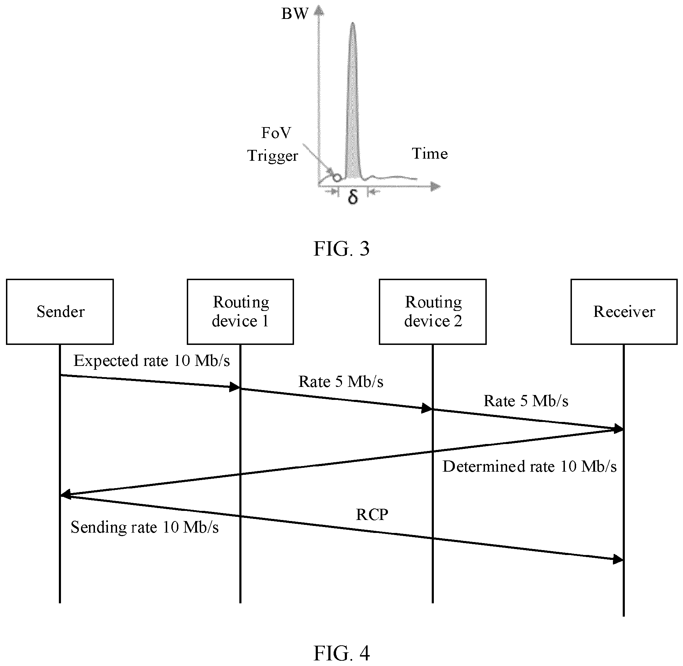

As shown in FIG. 2, FIG. 2 is a schematic diagram of a scenario of a field of view (field of view, FoV) transmission mode of a VR device. A transmission bit rate of 4K videos transmitted by an FoV method is 40 Mbps higher, typically requiring 80 Mbps. During general transmission, if the FoV does not rotate, a video may be compressed using I/P frames, and I frames with a large amount of transmission information may be compressed to reduce the requirement for bandwidth. When the field of view rotates, the video cannot be predicted based on previous I frames. Therefore, the I frames need to be sent and received immediately. Otherwise, user experience will be affected. The volume of burst traffic should be two to three times that of normal traffic. As shown in FIG. 3, when VR traffic bursts, the burst traffic cannot be transmitted in time due to insufficient link bandwidth, and the delay increases, causing frame freezing, resulting in poor user experience.

In actual application of VR, a network device needs to provide reliable bandwidth to ensure a transmission delay, so as to implement smooth experience of a VR service in a common scenario and a head turning scenario. As shown in FIG. 4, FIG. 4 is a schematic diagram of implementing rate control protocol (rate control protocol, RCP)-based end-to-end bandwidth negotiation. The specific process is as follows. During TCP connection establishment or data transmission, a sender (Sender) sends a bandwidth request (for example, 10 Mb/s), where the bandwidth request may be included in a TCP message. The TCP message is sent to a receiver (Receiver) via routing devices (Router 1 and Router 2). During transmission, if a routing device cannot provide bandwidth requested by the sender, the routing device modifies the bandwidth requested in the TCP message to bandwidth (for example, 5 Mb/s) that can be provided by the routing device. After the TCP message reaches the receiver, the receiver sends, via a TCP response message, bandwidth negotiated by the network to the sender. Finally, the sender sends data based on the negotiated bandwidth, and the routing device provides bandwidth guarantee based on the negotiated bandwidth. Using RCP can meet the requirement for bandwidth negotiation among a sender, a routing device, and a receiver, so that the network can provide transmission bandwidth that meets a service requirement.

To meet the requirement of a VR scenario, when a VR service starts, a data sender, a routing device, and a receiver negotiate bandwidth that ensures the VR service. To ensure that burst traffic can be forwarded as required, the negotiated bandwidth needs to be bandwidth for VR service bursting. In a scenario of an FoV transmission mode of a VR device shown in FIG. 2, bandwidth for VR service bursting is much greater than bandwidth of a normal service. If a routing device always reserves a bandwidth resource for the VR service based on the burst bandwidth, relatively large bandwidth can provide a service only for a small quantity of users, resulting in relatively low bandwidth utilization. In addition, if traffic bursts when a VR service is executed, a sender, a routing device, and a receiver negotiate bandwidth for ensuring the burst, and then burst traffic transmission is performed. In this process, the sender starts to send data only after sending a negotiation request to the receiver and receiving a response returned by the receiver. That is, the sender starts to send data only after a round-trip delay. Consequently, less time is left for data sending, and it is more difficult to meet the service requirement. To resolve the foregoing technical problems, embodiments of this application provide the following solutions.

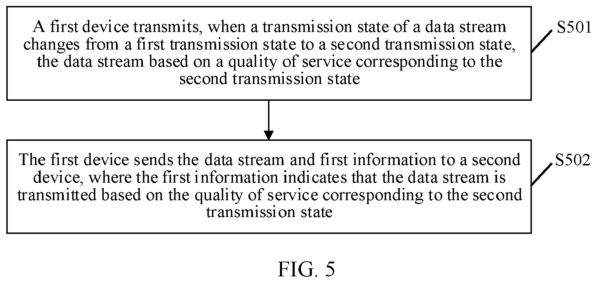

As shown in FIG. 5, FIG. 5 is a schematic diagram of data transmission according to an embodiment of this application. This embodiment of this application includes at least the following steps.

S501. A first device transmits, when a transmission state of a data stream changes from a first transmission state to a second transmission state, the data stream based on a quality of service corresponding to the second transmission state.

The first transmission state may represent normal traffic, that is, bandwidth of the data stream is less than a first preset threshold. The second transmission state may represent burst traffic, that is, the bandwidth of the data stream is not less than the first preset threshold. Alternatively, the first transmission state may represent a low-delay transmission state of the data stream, that is, a delay of the data stream is not greater than a second preset threshold, and the second transmission state may represent a high-delay transmission state of the data stream, that is, a delay of the data stream is greater than the second preset threshold. The first transmission state and the second transmission state may indicate opposite cases. For example, the first transmission state may represent burst traffic, and the second transmission state may represent normal traffic.

The quality of service may include bandwidth, a delay, and the like that need to be provided for ensuring transmission of the data stream. For example, a quality of service corresponding to the first transmission state is first bandwidth, and a quality of service corresponding to the second transmission state is second bandwidth. When the data stream is normal traffic, the data stream may be transmitted based on the first bandwidth. When the data stream is burst traffic, the data stream may be transmitted based on the second bandwidth. The first bandwidth is less than the second bandwidth.

The first device is a user plane device, an access network device, or a terminal device.

Optionally, the first device detects that the transmission state of the data stream changes from the first transmission state to the second transmission state. For example, the first device detects that the bandwidth of the data stream is greater than the first preset threshold, that is, the data stream changes from the normal traffic to the burst traffic. Alternatively, the first device detects that the transmission delay of the data stream is greater than the second preset threshold, that is, the data stream changes from the low-delay state to the high-delay state. Further, the transmission state of the data stream may be detected in the following manners.

For an uplink data stream:
When the first device is a user plane device, the user plane device may receive first indication information from an access network device. The first indication information indicates the second transmission state of the data stream, and the first indication information may be included in the data stream. Alternatively, before the data stream from the access network device is received, a first request message (for example, a bandwidth negotiation request) from the access network device may be first received. The first request message is for requesting transmission of the data stream based on the quality of service corresponding to the second transmission state. Alternatively, data of the data stream from the access network device is received, and based on a transmission state of the data of the data stream, it is determined that the transmission state of the data stream changes from the first transmission state to the second transmission state. For example, after the data stream sent by the access network device is received at a moment, it is determined that bandwidth of the received data stream exceeds a preset threshold, that is, it is determined that the data stream is burst traffic.

When the first device is an access network device, the access network device may receive second indication information from a terminal device. The second indication information indicates the second transmission state of the data stream, and the second indication information may be included in the data stream. Alternatively, data of the data stream from the terminal device is received, and based on a transmission state of the data of the data stream, it is determined that the transmission state of the data stream changes from the first transmission state to the second transmission state. For example, after a RAN device receives the data stream sent by the terminal device at a moment, it is determined that bandwidth of the received data stream exceeds a preset threshold. Alternatively, a data volume of a data stream that needs to be sent by the terminal device is queried, and it is determined that the data volume of the data stream increases, that is, it is determined that the data stream is burst traffic.

For a downlink data stream:
When the first device is a user plane device, the user plane device may receive first indication information from a data sender (for example, a DN network). The first indication information indicates the second transmission state of the data stream, and the first indication information may be included in the data stream. Alternatively, before the data stream from the data sender is received, a first request message from the data sender may be first received. The first request message is for requesting transmission of the data stream based on the quality of service corresponding to the second transmission state. The first request message may be RCP negotiation information. Alternatively, data of the data stream from the data sender is received, and based on a transmission state of the data of the data stream, it is determined that the transmission state of the data stream changes from the first transmission state to the second transmission state. For example, after the data stream sent by the data sender is received at a moment, it is determined that bandwidth of the received data stream exceeds a preset threshold, that is, it is determined that the data stream is burst traffic.

When the first device is an access network device, the access network device may receive second indication information from a user plane device. The second indication information indicates the second transmission state of the data stream, and the second indication information may be included in the data stream. Alternatively, data of the data stream from the user plane device is received, and based on a transmission state of the data of the data stream, it is determined that the transmission state of the data stream changes from the first transmission state to the second transmission state. For example, after the data stream sent by the user plane device is received at a moment, it is determined that bandwidth of the data stream exceeds a preset threshold, that is, it is determined that the data stream is burst traffic.

Optionally, that the transmission state of the data stream changes from the second transmission state to the first transmission state may be detected, and the first device may transmit the data stream based on a quality of service corresponding to the first transmission state. For example, when it is detected by the first device that bandwidth of the data stream does not exceed a preset threshold at a moment, that is, the data stream changes from the burst traffic to the normal traffic, the data stream may be transmitted based on the bandwidth of the normal traffic rather than the bandwidth of the burst traffic. The specific implementation is similar to the implementation of detecting that the transmission state of the data stream changes from the first transmission state to the second transmission state, and details are not described herein again.

Optionally, before receiving the data stream, the first device may receive first quality of service information and second quality of service information from a control plane device (for example, an SMF entity). The first quality of service information corresponds to the first transmission state of the data stream, and the second quality of service information corresponds to the second transmission state of the data stream. The first quality of service information and the second quality of service information may be bandwidth information, a transmission delay, or the like provided for ensuring transmission of a data stream.

For example, the PCF entity may determine configuration information based on a local configuration, or the PCF entity receives bandwidth information of the normal traffic and bandwidth information of the burst traffic from the AF entity, and then the PCF entity sends the configuration information to the SMF entity. The configuration information includes the first quality of service information of the normal traffic and the second quality of service information of the burst traffic. Then, the SMF entity indicates the first quality of service information and the second quality of service information to the first device (such as a terminal device, a UPF entity, or a RAN device). The AF entity and the PCF entity may directly communicate with each other, or may communicate with each other via a network exposure function (network exposure function, NEF).

Optionally, the control plane device may indicate the first quality of service information and the second quality of service information via a same QoS flow or different QoS flows. For example, the first quality of service information and the second quality of service information are bandwidth information. The control plane device may indicate the first quality of service information and the second quality of service information in the following manners.

In a first optional manner, if the burst traffic and the normal traffic are transmitted in a same QoS flow, bandwidth information is included in a policy of the QoS flow, and the bandwidth information of the burst traffic is explicitly indicated via the bandwidth information, so as to ensure transmission of the burst traffic.

In a second optional manner, if the burst traffic and the normal traffic are transmitted in a same QoS flow, a fifth-generation QoS identifier (fifth-generation QoS identifier, 5QI) may be included in configuration information delivered by the control plane device. Bandwidth information corresponding to the 5QI includes the bandwidth information of the normal traffic and the bandwidth information of the burst traffic, so as to ensure transmission of both the normal traffic and transmission of the burst traffic.

In a third optional manner, if the burst traffic and the normal traffic are transmitted in a same QoS flow, two 5QIs may be indicated in configuration information delivered by the control plane device. The first 5QI corresponds to the bandwidth information of the normal traffic, and the second 5QI corresponds to the bandwidth information of the burst traffic.

In a fourth optional manner, the data stream includes a plurality of substreams, that is, the burst traffic and the normal traffic are transmitted in different QoS flows, and the data stream of a same service is correspondingly transmitted in the two QoS flows. A first substream in the plurality of substreams corresponds to the first quality of service information, and a second substream in the plurality of substreams corresponds to the second quality of service information.

S502. The first device sends the data stream and first information to a second device, where the first information indicates that the data stream is transmitted based on the quality of service corresponding to the second transmission state.

The first information may include at least one of the following: bandwidth information, delay information, indication information, and a quality of service identifier. The bandwidth information may be bandwidth that needs to be provided for ensuring transmission of a data stream. The delay information may be a delay that needs to be provided for ensuring transmission of a data stream. The quality of service identifier may be used to determine a quality of service parameter. The indication information may indicate a transmission state of a data stream. Therefore, the first information may further indicate a transmission state (for example, a first transmission state or a second transmission state) of the data stream.

Optionally, after receiving the data stream and the first information, the second device determines the transmission state of the data stream based on the first information. Then, the data stream is sent to a next-hop device based on the transmission state of the data stream based on the bandwidth information, the transmission delay, or the quality of service parameter indicated by the first information, or the data stream is sent to a next-hop device based on quality of service information pre-configured by the control plane device. For example, the second device receives the first information and the data stream from the first device. The first information indicates that the data stream is burst traffic, and the first information includes that a bandwidth requirement of the burst traffic is first bandwidth, or that quality of service information of the burst traffic that is pre-configured by the control plane device is first bandwidth. In this case, the second device may send the burst traffic to a next-hop device based on the first bandwidth.

The following specifically describes how the first device indicates a transmission state of a data stream via the first information.

In a first optional manner, the first information may be a transport layer identifier (for example, different priorities in an Ethernet header/IP header). For example, different priorities in an Ethernet header/IP header indicate normal traffic or burst traffic. After the UPF entity receives the data stream, if the normal traffic and the burst traffic are forwarded via a same QoS flow, the normal traffic may be indicated by a priority 1 in the Ethernet header or the IP header, and the burst traffic may be indicated by a priority 2 in the Ethernet header or the IP header. Correspondingly, after receiving the data stream, the RAN device may determine, based on different priorities, that the data stream is the normal traffic or the burst traffic.

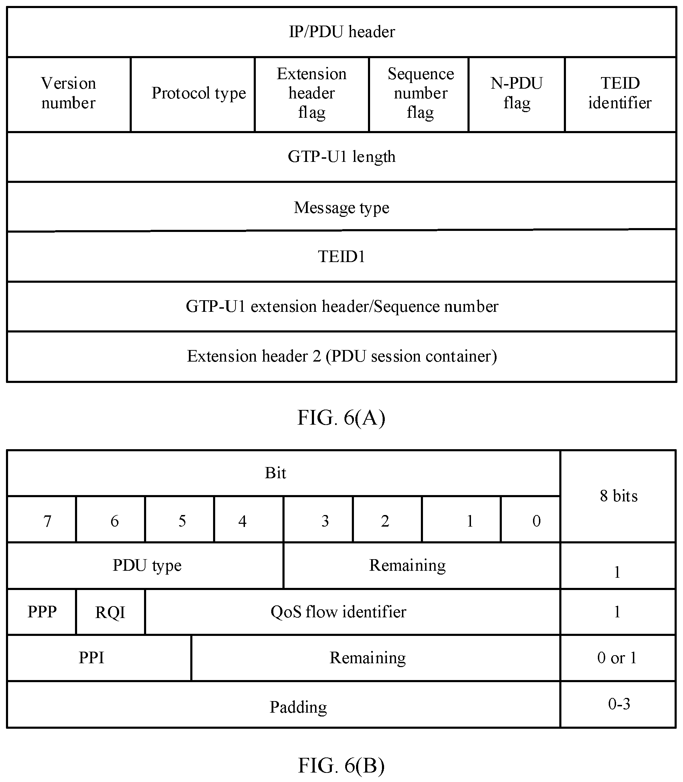

In a second optional manner, the first information may be included in a header of a general packet radio service tunneling protocol-user plane GTP-U message that carries the data stream. For example, as shown in FIG. 6(A), FIG. 6(A) is a schematic diagram of a GTP-U message according to an embodiment of this application. The GTP-U message may include a general packet radio service tunneling protocol-user plane (general packet radio service tunneling protocol, GTP-U1) length field, a message type field, a tunnel endpoint identifier (tunnel endpoint identifier, TEID) field, a GTP-U1 extension header/sequence number field, an extension header 2 field, and the like. Further, as shown in FIG. 6(B), FIG. 6(B) is a schematic diagram of a GTP-U extension header according to an embodiment of this application. The first information may be included in the GTP-U extension header 2 (for example, a padding (padding) field). The first information may be an identifier of burst traffic, and explicitly indicates burst traffic or implicitly indicates normal traffic. The first information may alternatively be a start identifier of burst traffic, and indicates start or end of the burst traffic. The first information may be included in a GTP-U control message that is sent before a data message carrying the data stream, or may be encapsulated in a GTP-U header of the data message. Optionally, a bandwidth requirement (for example, x Mbps) or data volume information (for example, a period of 10 ms, a maximum of 10 messages in a period, and a maximum of 1500 octets for each message) may be included in the extension header.

In a third optional manner, if the burst traffic and the normal traffic are transmitted in different QoS flows, when transmitting the burst traffic and the normal traffic, the user plane device indicates different QFIs (QoS Flow ID) in a GTP-U header, and one QFI corresponds to one transmission state (burst traffic or normal traffic).

Optionally, the first information may be included in a source address field and/or a destination address field of an Internet Protocol IPv6 message that carries the data stream. After receiving the IPv6 message, the second device may determine the transmission state of the data stream based on the first information in the source address field and/or the destination address field in the IP header. Therefore, the GTP-U header does not need to be further parsed, thereby improving the efficiency of processing the data stream. The second device may also provide corresponding quality of service guarantee based on the first information in the IPv6 address.

Optionally, when the first device encapsulates the GTP-U message using IPv6, the source address field and/or the destination address field of the IPv6 message may further include one or more of the following: a TEID in a GTP-U extension header, a sequence number of a data packet, and a QoS flow identifier (QoS Flow ID, QFI). After receiving the IPv6 message, the second device may determine, based on address information of the source address field and/or the destination address field in the IP header, the transmission state or session information of the data stream corresponding to a data path. Therefore, the GTP-U header does not need to be further parsed, thereby improving the efficiency of processing the data stream. In addition, a corresponding field (such as a TEID, a sequence number of a data packet, and a QoS flow identifier QFI) in the GTP-U header may be deleted, so as to reduce a size of the GTP-U header and improve transmission efficiency.

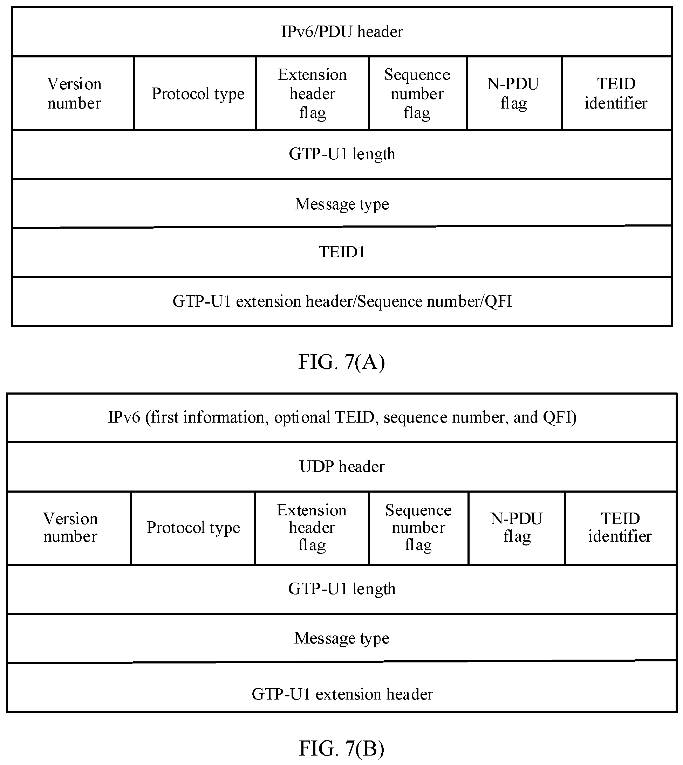

For example, as shown in FIG. 7(A), FIG. 7(A) is a schematic diagram of conventional GTP-U encapsulation. An IPv6 message includes an IPv6/UDP header, ..., a message type, TEID1, and a GTP-U1 extension header in sequence. The GTP-U extension header includes a sequence number and a QoS flow identifier (QFI). FIG. 7(B) is a schematic diagram of improved GTP-U encapsulation according to an embodiment of this application. When the GTP-U message is encapsulated using IPv6, one or more of the following may be included in the source address field or the destination address field of the IPv6 message: the TEID in the GTP-U header, the sequence number of the data packet, and the QoS flow identifier (QFI). In addition, if a receiver can support a new definition manner, the TEID in the GTP-U header, the sequence number of the data packet, and the QoS flow identifier may be deleted, so as to reduce header overheads. Alternatively, one or more of the following may be included in the source address field or the destination address field of the IPv6 message: the TEID in the GTP-U header, the sequence number of the data packet, and the QoS flow identifier (QFI), and the TEID in the GTP-U header, the sequence number of the data packet, and the QoS flow identifier are reserved, so that a receiver that does not support a new IPv6 address definition manner can process the GTP-U message in an original manner. In this case, a length of a sequence number in the source address field or the destination address field in the IPv6 may be different from a length of a sequence number in the GTP-U header. For example, the length of the sequence number in the IPv6 address is 2 octets, and the length of the sequence number in the GTP-U header is reserved as 4 octets.

For example, when a UPF1 entity sends an IPv6 message to a UPF2 entity or a RAN device, a source address in an outer IPv6 header of the message is an address of the UPF1 entity, and a destination address is an address of the UPF2 entity or the RAN device. The UPF1 entity may forward the IPv6 message based on a prefix (Prefix) of the destination address. Therefore, other information may be included after the prefix in the source address field or the destination address field in the outer IPv6 header of the message, for example, one or more of the following: a TEID, a QoS flow identifier, or a 5QI (5G QoS identifier), and a sequence number.

The source address field or the destination address field in the IPv6 is 16 octets. For example, if a length of the prefix is 8 octets, 10 octets following the prefix may be filled with other information. A length of a conventional TEID is 4 octets, and a length of an improved TEID in the IPv6 message may remain unchanged or may be customized. For example, if a network scale is small and a number of supported sessions is small, the length of the TEID can be reduced. If the UPF1 entity sends an IPv6 message to the UPF2 entity, after receiving the IPv6 message, the UPF2 entity may determine a forwarding policy based on the prefix and the TEID in the source address field or the destination address field in the IPv6 message, without further parsing the GTP-U header. Similarly, if the UPF1 entity sends an IPv6 message to the RAN device, the RAN device may directly determine a forwarding policy based on the prefix and the TEID in the source address field or the destination address field in the IPv6.

Optionally, the source address field or the destination address field in the IPv6 may further include a QFI or a 5QI. The UPF2 entity or the RAN device may determine a processing policy based on the QFI or the 5QI.

Optionally, the source address field or the destination address field in the IPv6 may further include a sequence number. A sequence number in a conventional GTP-U header is 4 octets, and a length of a sequence number in an improved IPv6 message may be reduced, so as to reduce overheads of the IPv6 header. Alternatively, an available length of the prefix is increased.

It may be understood that, based on an existing establishment process of a session or a QoS flow, if a TEID, a sequence number of a data packet, and a QoS flow identifier have a variable length, or conventionally defined GTP-U length information is changed, the SMF entity needs to indicate corresponding length information in a process of configuring the UPF entity or the RAN device.

In this embodiment of this application, when the transmission state of the data stream changes, the first device transmits the data stream based on the quality of service corresponding to the changed transmission state, thereby improving the utilization of network resources. For example, when the transmission state of the data stream is burst traffic, the data stream is transmitted based on guaranteed bandwidth of the burst traffic, to ensure successful transmission of the data stream. When the transmission state of the data stream changes from the burst traffic to normal traffic, reserved bandwidth is reduced, so that the reduced bandwidth resource is used to ensure another service, thereby improving bandwidth utilization.

The following specifically describes, using an example that a quality of service is bandwidth, how to transmit a data stream by using a bandwidth resource.

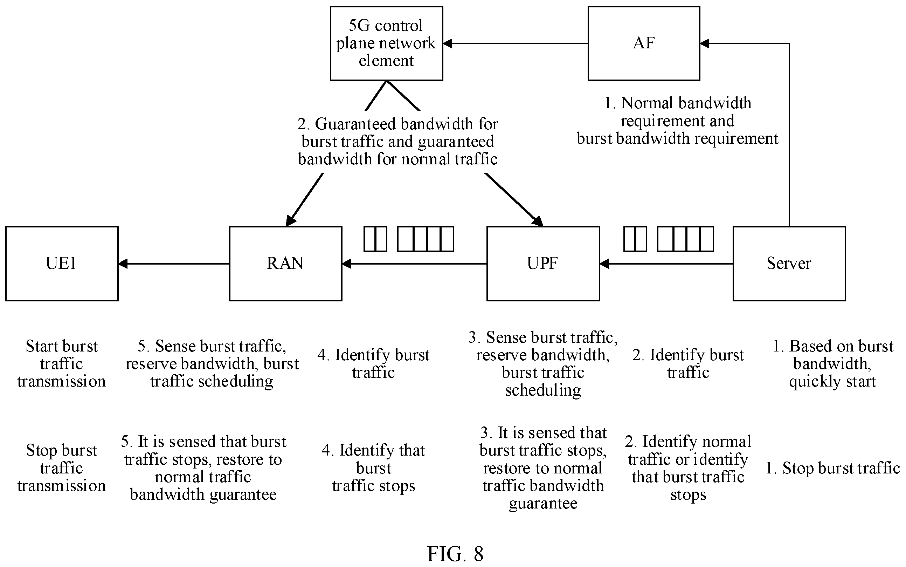

As shown in FIG. 8, FIG. 8 is a schematic diagram of bandwidth control according to an embodiment of this application. A 5G control plane obtains bandwidth of normal traffic and bandwidth of burst traffic of a service via an AF entity, and sends configuration information to a UPF entity and a RAN device. The configuration information includes the bandwidth of the normal traffic and the bandwidth of the burst traffic. In a normal transmission process, the UPF entity and the RAN device transmit a data stream based on the bandwidth of the normal traffic. When it is detected that the data stream changes from the normal traffic to the burst traffic, the UPF entity forwards the data stream to the RAN device based on the bandwidth of the burst traffic, and sends indication information to the RAN device. The indication information indicates that the data stream is the burst traffic. After the burst traffic is detected, the RAN device forwards the data stream based on the bandwidth of the burst traffic. When the burst traffic ends, a traffic change is detected by the UPF entity, the bandwidth is restored to the bandwidth of the normal traffic, and the RAN device is indicated to be restored to the normal traffic. The following describes a specific bandwidth control process.

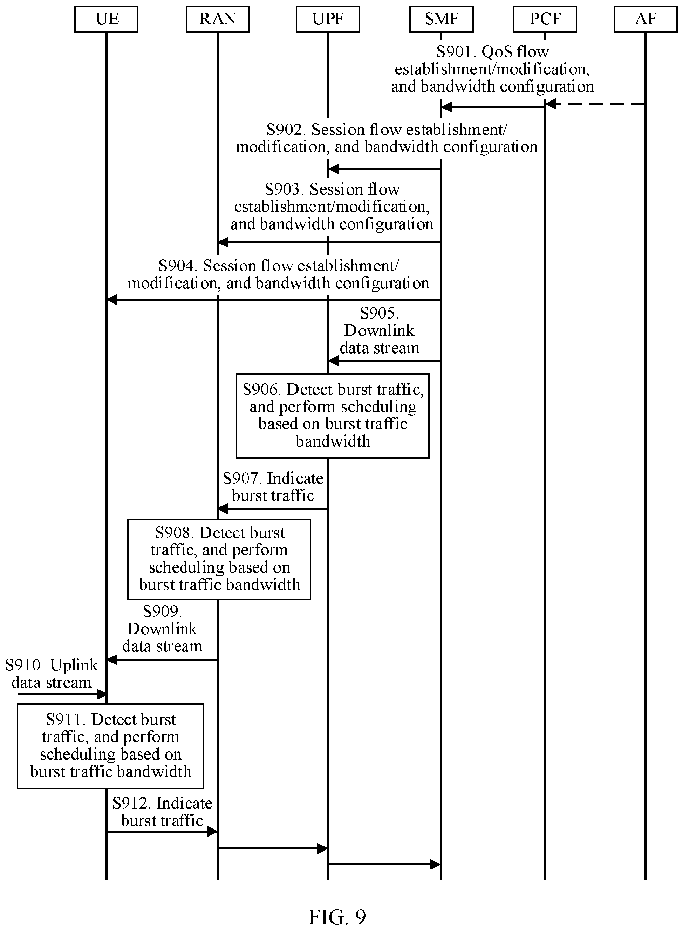

As shown in FIG. 9, FIG. 9 is a schematic diagram of data transmission according to an embodiment of this application. This embodiment of this application includes the following steps.

S901. A PCF entity establishes/modifies a QoS flow, and configures bandwidth information of burst traffic and bandwidth information of normal traffic for an SMF entity.

Specifically, the PCF entity may determine configuration information based on a local configuration, or the PCF entity receives bandwidth of the normal traffic and bandwidth of the burst traffic from an AF entity, and then the PCF entity sends the configuration information to the SMF entity. The configuration information includes the bandwidth of the burst traffic and the bandwidth of the normal traffic. The AF entity and the PCF entity may directly communicate with each other, or may communicate with each other via a network exposure function (network exposure function, NEF).

S902. The SMF entity sends configuration information to a UPF entity via a session creation/modification request. The configuration information includes bandwidth that needs to be provided for ensuring transmission of normal traffic and bandwidth that needs to be provided for ensuring transmission of burst traffic.

For a downlink data stream, the configuration information is necessary. After the transmission state of the data stream is determined, the UPF entity may transmit the data stream based on the bandwidth provided in the configuration information. For an uplink data stream, the configuration information is optional. When receiving the data stream from a RAN device, the UPF entity may not perform bandwidth guarantee control.

S903. The SMF entity sends configuration information to a RAN device via a session or user context creation/modification message. The configuration information includes bandwidth that needs to be provided for ensuring transmission of normal traffic and bandwidth that needs to be provided for ensuring transmission of burst traffic.

For a downlink data stream, the configuration information is optional. After receiving the data stream, the UPF entity may send bandwidth information and the data stream together to the RAN device, and the RAN device forwards the data stream based on bandwidth indicated by the bandwidth information. For an uplink data stream, the configuration information is necessary. After receiving the data stream, the RAN device transmits the data stream based on the bandwidth provided in the configuration information.

S904. The SMF entity sends configuration information to UE using a session or user context creation/modification message. The configuration information includes bandwidth that needs to be provided for ensuring transmission of normal traffic and bandwidth that needs to be provided for ensuring transmission of burst traffic.

S905. The UPF entity receives a data stream from a DN network.

S906. The UPF entity detects that a transmission state of the data stream changes from normal traffic to burst traffic.

Specifically, the data stream received by the UPF entity includes indication information indicating that the data stream is burst traffic. Alternatively, before receiving the burst traffic, the UPF entity first receives a bandwidth negotiation request. The bandwidth negotiation request indicates transmission of the data stream based on bandwidth corresponding to the burst traffic. Alternatively, it is determined, based on the transmission state of data of the received data stream, that the transmission state of the data stream changes from the normal traffic to the burst traffic, that is, a data volume increases.

S907. The UPF entity sends the data stream and first information to the RAN device.

Specifically, the UPF entity may send the data stream to the RAN device based on pre-configured bandwidth of the burst traffic. The first information may include indication information, and the indication information may indicate a transmission state (for example, the burst traffic) of the data stream. Optionally, the first information may further include bandwidth information and a quality of service identifier. The bandwidth information may include bandwidth that needs to be provided for ensuring transmission of the data stream, and the quality of service identifier is used to ensure bandwidth that needs to be provided for transmission of the data stream.

It is to be noted that the UPF entity may indicate the first information only when the burst traffic starts to be transmitted, for example, indicating the first information when a GTP-U message is transmitted. Alternatively, the first information is indicated by separately sending a message. Alternatively, the first information is carried in each data message for transmitting the burst traffic. For a specific indication manner, refer to the indication manner of the first information in the foregoing embodiment. Details are not described herein again.

S908. The RAN device receives the data stream, and detects that the data stream is burst traffic.

Specifically, the RAN device may receive the first information from the UPF entity, and determine the transmission state of the data stream based on the first information. Alternatively, the RAN device determines, based on the transmission state of the data of the data stream, that the transmission state of the data stream changes from normal traffic to burst traffic.

S909. The RAN device sends the data stream to the UE based on bandwidth of the burst traffic.

The bandwidth of the burst traffic may be indicated by the first information sent by the UPF entity, or may be pre-configured by the SMF entity.

S910. The UE receives uplink burst traffic, and sends the burst traffic to the RAN device.

S911. Based on a scheduling mechanism between the RAN device and the UE, the RAN device detects that the data stream is burst traffic, and performs scheduling based on bandwidth of the burst traffic. For example, when detecting a data volume of a data stream to be sent by the UE, the RAN device may determine, based on an increase of the data volume of the data stream, that the data stream is burst traffic.

S912. The RAN device forwards, to the UPF entity, the data stream and indication information indicating that the data stream is burst traffic.

Optionally, the indication information further indicates bandwidth that needs to be provided for ensuring transmission of burst traffic or a data volume of a data stream (a bandwidth requirement may be calculated based on the data volume). If the UPF entity does not need to perform bandwidth control at a user service granularity when forwarding the data stream to the DN, the transmission state of the data stream may not need to be detected, and the RAN device may perform bandwidth control. Optionally, the UPF entity may detect a transmission state of the data stream, and transmit, when it is detected that the data stream is burst traffic, the data stream based on bandwidth of the burst traffic.

For implementations of steps in this embodiment of this application, refer to the implementations of the corresponding steps in the foregoing embodiment. Details are not described herein again.

In this embodiment of this application, the control plane device obtains the bandwidth requirement of the burst traffic, and pre-configures the bandwidth requirement to the UE, the RAN device, or the UPF entity. When it is detected that the data stream is burst traffic, the RAN device or the UPF entity transmits the data stream based on the configured bandwidth or the bandwidth indicated by the indication information, thereby ensuring that the data stream is successfully transmitted, and saving bandwidth resources.

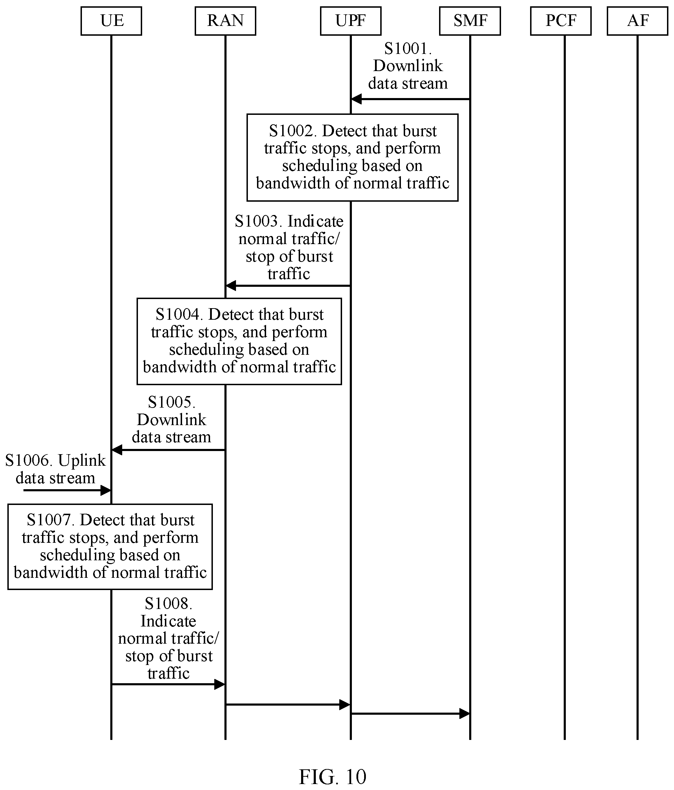

As shown in FIG. 10, FIG. 10 is a schematic diagram of another data transmission according to an embodiment of this application. This embodiment of this application includes the following steps.

S1001. A UPF entity receives a downlink data stream.

S1002. The UPF entity detects that burst traffic stops or the data stream is normal traffic.

Specifically, the data stream received by the UPF entity includes indication information indicating that the data stream is normal traffic. Alternatively, before receiving the data stream, the UPF entity first receives a bandwidth negotiation request for indicating transmission of the data stream based on bandwidth corresponding to the normal traffic. Alternatively, it is determined, based on a transmission state of data of the received data stream, that the transmission state of the data stream changes from the burst traffic to the normal traffic, that is, a data volume decreases.

Optionally, a quality of service that can be provided by the UPF entity changes. For example, supported uplink bandwidth changes.

S1003. The UPF entity sends the data stream to a RAN device.

Specifically, the UPF entity may send the data stream to the RAN device based on pre-configured bandwidth of the normal traffic.

Optionally, the UPF entity may send first information to the RAN device. The first information may include indication information, and the indication information may indicate a transmission state (for example, the normal traffic) of the data stream. Optionally, the first information may further include bandwidth information and a quality of service identifier. The bandwidth information may include bandwidth that needs to be provided for ensuring transmission of the data stream, and the quality of service identifier is used to ensure bandwidth that needs to be provided for transmission of the data stream.

Optionally, the indication information further indicates that a quality of service provided by the UPF entity in an uplink direction changes, for example, uplink bandwidth changes. Optionally, the first information may further include quality of service information, for example, uplink bandwidth information. When subsequently transmitting an uplink data stream, the RAN device sends the data stream to the UPF entity based on bandwidth indicated by the uplink bandwidth information, and the UPF entity receives or sends the data stream based on the bandwidth indicated by the uplink bandwidth information.

S1004. The RAN device detects that burst traffic stops or the data stream is normal traffic.

Specifically, the RAN device may receive the first information from the UPF entity, and determine the transmission state (for example, the normal traffic) of the data stream based on the first information. Alternatively, the RAN device determines, based on the transmission state of the data of the data stream, that the transmission state of the data stream changes from burst traffic to normal traffic.

S1005. The RAN device may send the data stream to UE based on bandwidth of the normal traffic. The bandwidth of the normal traffic may be indicated by the first information sent by the UPF entity, or may be pre-configured by an SMF entity.

Optionally, the RAN device may send the first information to the UE. The first information includes the indication information. The indication information indicates that a quality of service provided by the RAN device in an uplink direction changes. The first information may further include uplink bandwidth information. When subsequently transmitting an uplink data stream, the UE may send the data stream to the RAN device based on bandwidth indicated by the uplink bandwidth information, and the RAN device receives and transmits the data stream based on the bandwidth indicated by the uplink bandwidth information.

S1006. The UE receives an uplink data stream, or the UE sends an uplink data stream to the RAN.

S1007. Based on a scheduling mechanism between the RAN device and the UE, the RAN device detects that the data stream is normal traffic, and performs scheduling based on bandwidth of the normal traffic.

Optionally, a quality of service that can be provided by the RAN device changes. For example, supported downlink bandwidth changes.

S1008. The RAN device forwards the data stream to the UPF entity.

Optionally, the RAN device sends the first information to the UPF entity. The first information may include indication information, and the indication information indicates that the data stream is normal traffic. Optionally, the indication information further indicates bandwidth that needs to be provided for ensuring transmission of normal traffic or a data volume of a data stream (a bandwidth requirement may be calculated based on the data volume).

Optionally, the indication information further indicates that a quality of service provided by the RAN device in a downlink direction changes, for example, downlink bandwidth changes. Optionally, the first information may further include quality of service information, for example, downlink bandwidth information. When subsequently transmitting a downlink data stream, the UPF entity sends the data stream based on bandwidth indicated by the downlink bandwidth information, and the RAN device transmits the data stream based on the bandwidth indicated by the downlink bandwidth information.

For implementations of steps in this embodiment of this application, refer to the implementations of the corresponding steps in the foregoing embodiment. Details are not described herein again.

In this embodiment of this application, the user plane device may perform scheduling and bandwidth reservation based on the bandwidth information of the data stream transmitted in real time, to reduce reserved bandwidth when the normal traffic is forwarded, so that the bandwidth resource is used to ensure another service, thereby improving bandwidth utilization.

The methods in embodiments of this application are described above in detail, and apparatuses in embodiments of this application are provided below.

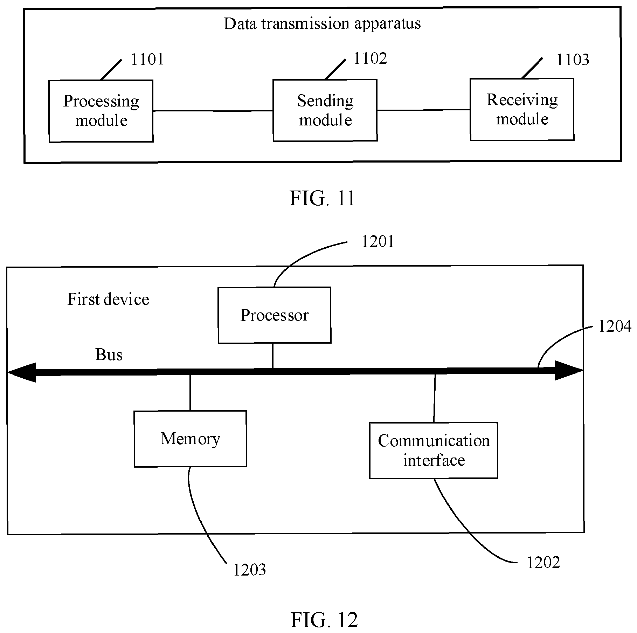

As shown in FIG. 11, FIG. 11 is a schematic diagram of a structure of a data transmission apparatus according to an embodiment of this application. The data transmission apparatus may be a user plane device, an access network device, or a terminal device, or a chip or processing system in a user plane device, an access network device, or a terminal device. The apparatus may be configured to implement any method and function in which the user plane device, the access network device, or the terminal device is involved in any one of the foregoing embodiments. The apparatus may include a processing module 1101, a sending module 1102, and a receiving module 1103. Optionally, the sending module 1102 and the receiving module 1103 correspond to a radio frequency circuit and a baseband circuit that are included in the user plane device, the access network device, or the terminal device. The modules are described in detail as follows.

The processing module 1101 is configured to transmit, when a transmission state of a data stream changes from a first transmission state to a second transmission state, the data stream based on a quality of service corresponding to the second transmission state.

The sending module 1102 is configured to send the data stream and first information to a second device, where the first information indicates that the data stream is transmitted based on the quality of service corresponding to the second transmission state.

Optionally, the receiving module 1103 is configured to receive first quality of service information and second quality of service information from a control plane device, where the first quality of service information corresponds to the first transmission state of the data stream, and the second quality of service information corresponds to the second transmission state of the data stream.

Optionally, the data stream includes a plurality of substreams, a first substream in the plurality of substreams corresponds to the first quality of service information, and a second substream in the plurality of substreams corresponds to the second quality of service information.

Optionally, the processing module 1101 is further configured to detect that the transmission state of the data stream changes from the first transmission state to the second transmission state.

Optionally, the processing module 1101 is further configured to detect that transmission bandwidth or a transmission delay of the data stream is greater than a preset threshold.

Optionally, when the data transmission apparatus is a user plane device, the receiving module 1103 is further configured to receive first indication information, where the first indication information indicates the second transmission state of the data stream; or the receiving module 1103 is further configured to receive a first request message, where the first request message is for requesting transmission of the data stream based on the quality of service corresponding to the second transmission state; or the receiving module 1103 is further configured to receive data of the data stream, and determine, based on a transmission state of the data of the data stream, that the transmission state of the data stream changes from the first transmission state to the second transmission state.

Optionally, when the first device is an access network device, the receiving module 1103 is further configured to receive second indication information, where the second indication information indicates the second transmission state of the data stream.

Optionally, the processing module 1101 is further configured to detect that the transmission state of the data stream changes from the second transmission state to the first transmission state, and transmit the data stream based on a quality of service corresponding to the first transmission state.

Optionally, the first information is a transport layer identifier.

Optionally, the first information is included in a header of a general packet radio service tunneling rotocol-user plane GTP-U message that carries the data stream.

Optionally, the first information is included in a source address field and/or a destination address field of an Internet Protocol IPv6 message that carries the data stream.

Optionally, the first information includes at least one of the following: bandwidth information, a transmission delay, indication information, and a quality of service identifier.

It is to be noted that, for implementation of the modules, refer to corresponding descriptions of the method embodiments shown in FIG. 5, FIG. 8, and FIG. 9, to perform the methods and functions performed by the user plane device, the access network device, or the terminal device in the foregoing embodiments.

As shown in FIG. 12, FIG. 12 is a schematic diagram of a structure of a first device according to an embodiment of this application. The first device may include at least one processor 1201, at least one communication interface 1202, at least one memory 1203, and at least one communication bus 1204.

The processor 1201 may be a central processing unit, a general-purpose processor, a digital signal processor, an application-specific integrated circuit, a field programmable gate array or another programmable logic device, a transistor logic device, a hardware component, or any combination thereof. The processor may implement or execute various examples of logical blocks, modules, and circuits described with reference to content disclosed in this application. Alternatively, the processor may be a combination of processors implementing a computing function, for example, a combination of one or more microprocessors, or a combination of the digital signal processor and a microprocessor. The communication bus 1204 may be a peripheral component interconnect PCI bus, an extended industry standard architecture EISA bus, or the like. The bus may be classified into an address bus, a data bus, a control bus, and the like. For ease of representation, only one bold line is used to represent the bus in FIG. 12, but this does not mean that there is only one bus or only one type of bus. The communication bus 1204 is configured to implement connection and communication between these components. The communication interface 1202 of the device in embodiments of this application is configured to perform signaling or data communication with another node device. The memory 1203 may include a volatile memory, such as a non-volatile dynamic random access memory (nonvolatile random access memory, NVRAM), a phase-change random access memory (phase change RAM, PRAM), or a magnetoresistive random access memory (magnetoresistive RAM, MRAM). The memory may further include a nonvolatile memory, such as at least one magnetic disk storage device, an electrically erasable programmable read-only memory (electrically erasable programmable read-only memory, EEPROM), a flash storage device such as a NOR flash memory (NOR flash memory) or a NAND flash memory (NAND flash memory), or a semiconductor device such as a solid-state drive (solid-state drive, SSD). Optionally, the memory 1203 may be at least one storage apparatus far away from the processor 1201. Optionally, the memory 1203 may further store a group of program code. Optionally, the processor 1201 may further execute the program stored in the memory 1203.

When a transmission state of a data stream changes from a first transmission state to a second transmission state, the data stream is transmitted based on a quality of service corresponding to the second transmission state.

The data stream and first information are sent to a second device. The first information indicates that the data stream is transmitted based on the quality of service corresponding to the second transmission state.

Optionally, the processor 1201 is further configured to perform the following operation steps:
receiving first quality of service information and second quality of service information from a control plane device, where the first quality of service information corresponds to the first transmission state of the data stream, and the second quality of service information corresponds to the second transmission state of the data stream.

Optionally, the data stream includes a plurality of substreams, a first substream in the plurality of substreams corresponds to the first quality of service information, and a second substream in the plurality of substreams corresponds to the second quality of service information.

Optionally, the processor 1201 is further configured to perform the following operation steps:
detecting that the transmission state of the data stream changes from the first transmission state to the second transmission state.

Optionally, the processor 1201 is further configured to perform the following operation steps:
detecting, by the first device, that transmission bandwidth or a transmission delay of the data stream is greater than a preset threshold.

Optionally, the first device is a user plane device, an access network device, or a terminal device.

Optionally, the processor 1201 is further configured to perform the following operation steps:
receiving first indication information, where the first indication information indicates the second transmission state of the data stream;
receiving a first request message, where the first request message is for requesting transmission of the data stream based on the quality of service corresponding to the second transmission state; or
receiving data of the data stream, and determining, based on a transmission state of the data of the data stream, that the transmission state of the data stream changes from the first transmission state to the second transmission state.

Optionally, the processor 1201 is further configured to perform the following operation steps:
receiving second indication information, where the second indication information indicates the second transmission state of the data stream.

Optionally, the processor 1201 is further configured to perform the following operation steps:
detecting that the transmission state of the data stream changes from the second transmission state to the first transmission state, and transmitting, by the first device, the data stream based on a quality of service corresponding to the first transmission state.

Optionally, the first information is a transport layer identifier.

Optionally, the first information is included in a header of a general packet radio service tunneling protocol-user plane GTP-U message that carries the data stream.

Optionally, the first information is included in a source address field and/or a destination address field of an Internet Protocol IPv6 message that carries the data stream.

Optionally, the first information includes at least one of the following: bandwidth information, a transmission delay, indication information, and a quality of service identifier.

Further, the processor may further cooperate with the memory and the communication interface to perform the operations of the user plane device, the access network device, or the terminal device in embodiments of this application.

An embodiment of this application further provides a chip system. The chip system includes a processor, configured to support a user plane device, an access network device, or a terminal device in implementing functions in any one of the foregoing embodiments, for example, generating or processing the first information or the data stream in the foregoing method. In a possible design, the chip system may further include a memory, and the memory is configured to store program instructions and data that are necessary to a user plane device, an access network device, or a terminal device. The chip system may include a chip, or may include a chip and another discrete component.

An embodiment of this application further provides a processor, coupled to a memory. The processor is configured to perform any method and function in which the user plane device, the access network device, or the terminal device is involved in any one of the foregoing embodiments.

An embodiment of this application further provides a computer program product including instructions. The instructions, when run on a computer, cause the computer to perform any method and function in which the user plane device, the access network device, or the terminal device is involved in any one of the foregoing embodiments.

An embodiment of this application further provides an apparatus, configured to perform any method and function in which the user plane device, the access network device, or the terminal device is involved in any one of the foregoing embodiments.

An embodiment of this application further provides a wireless communication system. The system includes at least one terminal device, at least one access network device, and at least one user plane device in any one of the foregoing embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

The objectives, technical solutions, and beneficial effects of this application are further described in detail in the foregoing specific implementations. The invention is defined by the appended claims.

## Claims

1. A data transmission method, wherein the method comprises:
transmitting (S501), by a first device when a transmission state of a data stream changes from a first transmission state to a second transmission state, the data stream based on a quality of service corresponding to the second transmission state; and
sending (S502), by the first device, the data stream and first information to a second device, wherein the first information indicates that the data stream is burst traffic;
**characterised in that** the sending (S502), by the first device, the data stream and first information to a second device comprises:
sending, by the first device, a general packet radio service tunneling protocol-user plane, GTP-U, message, wherein the GTP-U message carries the data stream, and a header of the GTP-U message comprises the first information and data volume information of the data stream.

2. The method according to claim 1, wherein the method further comprises:
receiving, by the first device, first quality of service information and second quality of service information from a control plane device, wherein the first quality of service information corresponds to the first transmission state of the data stream, and the second quality of service information corresponds to the second transmission state of the data stream.

3. The method according to claim 2, wherein the data stream comprises a plurality of substreams, a first substream in the plurality of substreams corresponds to the first quality of service information, and a second substream in the plurality of substreams corresponds to the second quality of service information.

4. The method according to any one of claims 1 to 3, wherein the method further comprises:
detecting, by the first device, that the transmission state of the data stream changes from the first transmission state to the second transmission state.

5. The method according to claim 4, wherein the detecting, by the first device, that the transmission state of the data stream changes from the first transmission state to the second transmission state comprises:
detecting, by the first device, that transmission bandwidth or a transmission delay of the data stream is greater than a preset threshold.

6. The method according to claim 4 or 5, wherein the first device is a user plane device, an access network device, or a terminal device.

7. The method according to claim 6, wherein when the first device is a user plane device, the detecting that the transmission state of the data stream changes from the first transmission state to the second transmission state comprises:
receiving first indication information, wherein the first indication information indicates the second transmission state of the data stream; or
receiving a first request message, wherein the first request message is for requesting transmission of the data stream based on the quality of service corresponding to the second transmission state; or
receiving data of the data stream, and determining, based on a transmission state of the data of the data stream, that the transmission state of the data stream changes from the first transmission state to the second transmission state.

8. The method according to claim 6, wherein when the first device is an access network device, the detecting that the transmission state of the data stream changes from the first transmission state to the second transmission state comprises:
receiving second indication information, wherein the second indication information indicates the second transmission state of the data stream.

9. The method according to any one of claims 1 to 8, wherein the method further comprises:
detecting that the transmission state of the data stream changes from the second transmission state to the first transmission state, and transmitting, by the first device, the data stream based on a quality of service corresponding to the first transmission state.

10. The method according to any one of claims 1 to 9, wherein the first information is a transport layer identifier.

11. The method according to any one of claims 1 to 9, wherein the first information is comprised in a source address field and/or a destination address field of an Internet Protocol, IPv6, message that carries the data stream.

12. A data transmission apparatus, comprising
at least one processor; and
a memory, storing instructions, which when executed by the at least one processor, cause the data transmission apparatus to implement the method in any one of claims 1 to 11.

13. A computer-readable storage medium, configured to store instructions, the instructions, when run on a data transmission apparatus, causing the data transmission apparatus to perform the method according to any one of claims 1 to 11.

14. A chip, comprising a processor and a memory, wherein the memory is configured to store instructions, and the processor runs the instructions to cause the chip to perform the method according to any one of claims 1 to 11.

## Patentansprüche

1. Datenübertragungssystem, wobei das Verfahren Folgendes umfasst:
Übertragen (S501), durch eine erste Vorrichtung, wenn sich ein Übertragungszustand eines Datenstroms von einem ersten Übertragungszustand zu einem zweiten Übertragungszustand ändert, des Datenstroms, basierend auf einer Dienstgüte, die dem zweiten Übertragungszustand entspricht; und
Senden (S502), durch die erste Vorrichtung, des Datenstroms und erster Informationen an eine zweite Vorrichtung, wobei die ersten Informationen angeben, dass der Datenstrom Burst-Datenverkehr ist;
**dadurch gekennzeichnet, dass** das Senden (S502), durch die erste Vorrichtung, des Datenstroms und erster Informationen an eine zweite Vorrichtung Folgendes umfasst: Senden, durch die erste Vorrichtung, einer GPRS(general packet radio service)-Tunneling-Protokoll-Benutzerebenen(GTP-U)-Nachricht, wobei die GTP-U-Nachricht den Datenstrom mit sich führt und ein Header der GTP-U-Nachricht die ersten Informationen und Datenvolumeninformation des Datenstroms umfasst.

2. Verfahren nach Anspruch 1, wobei das Verfahren ferner Folgendes umfasst:
Empfangen, durch die erste Vorrichtung, von ersten Dienstgüteinformationen und zweiten Dienstgüteinformationen von einer Steuerebenenvorrichtung, wobei die ersten Dienstgüteinformationen dem ersten Übertragungszustand des Datenstroms entsprechen und die zweiten Dienstgüteinformationen dem zweiten Übertragungszustand des Datenstroms entsprechen.

3. Verfahren nach Anspruch 2, wobei der Datenstrom eine Vielzahl von Teilströmen umfasst, ein erster Teilstrom aus der Vielzahl von Teilströmen den ersten Dienstgüteinformationen entspricht und ein zweiter Teilstrom aus der Vielzahl von Teilströmen den zweiten Dienstgüteinformationen entspricht.

4. Verfahren nach einem der Ansprüche 1 bis 3, wobei das Verfahren ferner Folgendes umfasst:
Detektieren durch die erste Vorrichtung, dass sich der Übertragungszustand des Datenstroms von dem ersten Übertragungszustand zu dem zweiten Übertragungszustand ändert.

5. Verfahren nach Anspruch 4, wobei das Detektieren durch die erste Vorrichtung, dass sich der Übertragungszustand des Datenstroms von dem ersten Übertragungszustand zu dem zweiten Übertragungszustand ändert, Folgendes umfasst:
Detektieren durch die erste Vorrichtung, dass eine Übertragungsbandbreite oder eine Übertragungsverzögerung des Datenstroms größer als ein voreingestellter Schwellenwert ist.

6. Verfahren nach Anspruch 4 oder 5, wobei die erste Vorrichtung eine Benutzerebenenvorrichtung, eine Zugangsnetzwerkvorrichtung oder eine Endgerät ist.

7. Verfahren nach Anspruch 6, wobei, wenn die erste Vorrichtung eine Benutzerebenenvorrichtung ist, das Detektieren, dass sich der Übertragungszustand des Datenstroms von dem ersten Übertragungszustand zu dem zweiten Übertragungszustand ändert, Folgendes umfasst:
Empfangen erster Anzeigeinformationen, wobei die ersten Anzeigeinformationen den zweiten Übertragungszustand des Datenstroms anzeigen; oder Empfangen einer ersten Anforderungsnachricht, wobei die erste Anforderungsnachricht zum Anfordern einer auf der dem zweiten Übertragungszustand entsprechenden Dienstgüte basierenden Übertragung des Datenstroms dient; oder Empfangen von Daten des Datenstroms und Bestimmen, basierend auf einem Übertragungszustand der Daten des Datenstroms, dass sich der Übertragungszustand des Datenstroms von dem ersten Übertragungszustand zu dem zweiten Übertragungszustand ändert.

8. Verfahren nach Anspruch 6, wobei, wenn die erste Vorrichtung eine Zugangsnetzwerkvorrichtung ist, das Detektieren, dass sich der Übertragungszustand des Datenstroms von dem ersten Übertragungszustand zu dem zweiten Übertragungszustand ändert, Folgendes umfasst:
Empfangen zweiter Anzeigeinformationen, wobei die zweiten Anzeigeinformationen den zweiten Übertragungszustand des Datenstroms anzeigen.

9. Verfahren nach einem der Ansprüche 1 bis 8, wobei das Verfahren ferner Folgendes umfasst:
Detektieren, dass sich der Übertragungszustand des Datenstroms von dem zweiten Übertragungszustand zu dem ersten Übertragungszustand ändert, und Übertragen, durch die erste Vorrichtung, des Datenstroms, basierend auf einer Dienstgüte, die dem ersten Übertragungszustand entspricht.

10. Verfahren nach einem der Ansprüche 1 bis 9, wobei die ersten Informationen eine erste Transportschichtkennung sind.

11. Verfahren nach einem der Ansprüche 1 bis 9, wobei die ersten Informationen in einem Quelladressfeld und/oder einem Zieladressfeld Internet-Protokoll(IPv6)-Nachricht, die den Datenstrom mit sich führt, umfasst sind.

12. Datenübertragungseinrichtung, die Folgendes umfasst:
mindestens einen Prozessor; und
einen Speicher, auf dem Anweisungen gespeichert sind, die, wenn sie durch mindestens einen Prozessor ausgeführt werden, die Datenübertragungseinrichtung veranlassen, das Verfahren nach einem der Ansprüche 1 bis 11 zu implementieren.

13. Computerlesbares Speichermedium, das konfiguriert ist, um Anweisungen zu speichern, wobei die Anweisungen, wenn sie auf einer Datenübertragungseinrichtung ablaufen, die Datenübertragungseinrichtung veranlassen, das Verfahren nach einem der Ansprüche 1 bis 11 durchzuführen.

14. Chip, der einen Prozessor und einen Speicher umfasst, wobei der Speicher konfiguriert ist, um Anweisungen zu speichern, und der Prozessor die Anweisungen ablaufen lässt, um den Chip zu veranlassen, das Verfahren nach einem der Ansprüche 1 bis 11 durchzuführen.

## Revendications

1. Procédé de transmission de données, dans lequel le procédé comprend :
la transmission (S501), par un premier dispositif lorsqu'un état de transmission d'un flux de données passe d'un premier état de transmission à un second état de transmission, du flux de données sur la base d'une qualité de service correspondant au second état de transmission ; et
l'envoi (S502), par le premier dispositif, du flux de données et de premières informations à un second dispositif, dans lequel les premières informations indiquent que le flux de données est un trafic par rafales ;
**caractérisé en ce que** l'envoi (S502), par le premier dispositif, du flux de données et de premières informations à un second dispositif comprend :
l'envoi, par le premier dispositif, d'un message de plan utilisateur de protocole de tunnellisation de service général de radiocommunication par paquets, GTP-U, dans lequel le message GTP-U transporte le flux de données, et un en-tête du message GTP-U comprend les premières informations et des informations de volume de données du flux de données.

2. Procédé selon la revendication 1, dans lequel le procédé comprend en outre :
la réception, par le premier dispositif, de premières informations de qualité de service et de secondes informations de qualité de service en provenance d'un dispositif de plan de commande, dans lequel les premières informations de qualité de service correspondent au premier état de transmission du flux de données, et les secondes informations de qualité de service correspondent au second état de transmission du flux de données.

3. Procédé selon la revendication 2, dans lequel le flux de données comprend une pluralité de sous-flux, un premier sous-flux dans la pluralité de sous-flux correspond aux premières informations de qualité de service, et un second sous-flux dans la pluralité de sous-flux correspond aux secondes informations de qualité de service.

4. Procédé selon l'une quelconque des revendications 1 à 3, dans lequel le procédé comprend en outre :
le fait de détecter, par le premier dispositif, que l'état de transmission du flux de données passe du premier état de transmission au second état de transmission.

5. Procédé selon la revendication 4, dans lequel le fait de détecter, par le premier dispositif, que l'état de transmission du flux de données passe du premier état de transmission au second état de transmission comprend :
le fait de détecter, par le premier dispositif, qu'une largeur de bande de transmission ou qu'un retard de transmission du flux de données est supérieur à un seuil prédéfini.

6. Procédé selon la revendication 4 ou 5, dans lequel le premier dispositif est un dispositif de plan utilisateur, un dispositif de réseau d'accès ou un dispositif terminal.

7. Procédé selon la revendication 6, dans lequel, lorsque le premier dispositif est un dispositif de plan utilisateur, le fait de détecter que l'état de transmission du flux de données passe du premier état de transmission au second état de transmission comprend :
la réception de premières informations d'indication, dans lequel les premières informations d'indication indiquent le second état de transmission du flux de données ; ou
la réception d'un premier message de demande, dans lequel le premier message de demande est destiné à la demande de transmission du flux de données sur la base de la qualité de service correspondant au second état de transmission ; ou
la réception de données du flux de données, et le fait de déterminer, sur la base d'un état de transmission des données du flux de données, que l'état de transmission du flux de données passe du premier état de transmission au second état de transmission.

8. Procédé selon la revendication 6, dans lequel, lorsque le premier dispositif est un dispositif de réseau d'accès, le fait de détecter que l'état de transmission du flux de données passe du premier état de transmission au second état de transmission comprend :
la réception de secondes informations d'indication, dans lequel les secondes informations d'indication indiquent le second état de transmission du flux de données.

9. Procédé selon l'une quelconque des revendications 1 à 8, dans lequel le procédé comprend en outre :
le fait de détecter que l'état de transmission du flux de données passe du second état de transmission au premier état de transmission, et la transmission, par le premier dispositif, du flux de données sur la base d'une qualité de service correspondant au premier état de transmission.

10. Procédé selon l'une quelconque des revendications 1 à 9, dans lequel les premières informations sont un identifiant de couche transport.

11. Procédé selon l'une quelconque des revendications 1 à 9, dans lequel les premières informations sont comprises dans un champ d'adresse source et/ou un champ d'adresse de destination d'un message de protocole Internet, IPv6, qui transporte le flux de données.

12. Appareil de transmission de données, comprenant
au moins un processeur ; et
une mémoire, stockant des instructions qui, lorsqu'elles sont exécutées par l'au moins un processeur, amènent l'appareil de transmission de données à mettre en œuvre le procédé selon l'une quelconque des revendications 1 à 11.

13. Support de stockage lisible par ordinateur, configuré pour stocker des instructions, les instructions, lorsqu'elles sont exécutées sur un appareil de transmission de données, amenant l'appareil de transmission de données à réaliser le procédé selon l'une quelconque des revendications 1 à 11.

14. Puce, comprenant un processeur et une mémoire, dans laquelle la mémoire est configurée pour stocker des instructions, et le processeur exécute les instructions pour amener la puce à réaliser le procédé selon l'une quelconque des revendications 1 à 11.
